# EUROPÄISCHE PATENTANMELDUNG

(11) **EP 0 584 442 A1**
(43) Veröffentlichungstag der Anmeldung: **02.03.1994**
(21) Anmeldenummer: 93102427.7
(22) Anmeldetag: 17.02.1993
(51) Int. Cl.: G10K 11/16, B60R 13/08, B60R 13/02

(54) **Verkleidungselement**

(30) Priorität: 25.08.1992 DE 4228169
(71) Anmelder: Firma Carl Freudenberg, D-69469 Weinheim (DE)
(72) Erfinder: Mattutat, Manfred, W-6802 Ladenburg (DE); Hierschbiel, Thomas, W-6940 Weinheim (DE)

(57) **Zusammenfassung**

Verkleidungselement, umfassend einen Luftschall absorbierenden Plattenkörper (1) aus polymerem Werkstoff, der auf einem Träger (2) festgelegt ist, wobei der Plattenkörper (1) mit zumindest einem akustischen Resonator (3) zum Absorbieren der entsprechenden Resonanzfrequenz versehen ist und wobei der Resonator (3) auf seiner zur Schallquelle gerichteten Oberfläche (4) eine gemäß der Helmflolz-Gleichung dimensionierte Öffnung (7) aufweist. Der Plattenkörper (1) besteht aus einer Tiefziehfolie aus thermoplastischem Werkstoff und ist auf der dem Träger (2) zugewandten Seite mit zumindest einem aus der Folie ausgestülpten Befestigungsvorsprung (5) versehen, der eine Ausnehmung (6) des Trägers (2) zumindest teilweise durchdringt und mit dieser in Eingriff ist.

## Beschreibung

Die Erfindung betrifft ein Verkleidungselement, umfassend einen Luftschall absorbierenden Plattenkörper aus polymerem Werkstoff, der auf einem Träger festgelegt ist, wobei der Plattenkörper mit zumindest einem akustischen Resonator zum Absorbieren der entsprechenden Resonanzfrequenz versehen ist und wobei der Resonator auf seiner zur Schallquelle gerichteten Oberfläche eine gemäß der Helmholz-Gleichung dimensionierte Öffnung aufweist.

Ein solches Verkleidungselement ist aus der DE-OS 40 11 705 bekannt. Das Luftschall absorbierende Formteil ist derart gestaltet, daß im Wirkungsbereich jedes tieffrequenten Resonators mehrere voneinander verschiedene, höherfrequente Resonatoren flächendeckend angeordnet sind, um einen möglichst breitbandigen Frequenzbereich zu bedämpfen. Das Formteil besteht aus einem biegeweichen, flächigen Gebilde, das beim Auftreffen von Luftschall zu Eigenschwingungen angeregt wird. Das biegeweiche Formteil wird auf eine Unterlage aufgebracht und an dieser befestigt. Die Teile können miteinander verschweißt oder zusammengeclipst oder aufeinandergeklebt werden, eine Klebeverbindung ist ebenfalls genannt. Dabei ist allerdings zu beachten, daß ein Verschweißen der Teile nur dann möglich ist, wenn sie aus einem gleichartigen Thermoplast bestehen, da der Schmelzpunkt des Werkstoffs im wesentlichen übereinstimmen muß. Ein Anclipsen des Plattenkörpers an den Träger setzt, ebenso wie beispielsweise Schrauben und Nieten, ein drittes Bauteil zur Verbindung voraus. Daraus ergibt sich eine vergleichsweise aufwendige Montage, was in wirtschaftlicher und fertigungstechnischer Hinsicht wenig befriedigend ist.

Der Erfindung liegt die Aufgabe zugrunde, ein Verkleidungselement der vorbekannten Art derart weiterzuentwickeln, daß der Luftschall absorbierende Plattenkörper und der Träger jeweils aus einem an den Anwendungsfall angepaßten Werkstoff bestehen können und die Befestigung der beiden Teile aneinander möglichst einfach unter Vermeidung eines zusätzlichen Bauteils erfolgen kann. Außerdem sollen Schwierigkeiten bei der Demontage und der anschließenden Wiederaufbereitung vermieden werden.

Diese Aufgabe wird erfindungsgemäß durch die Merkmale von Anspruch 1 gelöst. Auf vorteilhafte Ausgestaltungen nehmen die Unteransprüche Bezug.

Im Hinblick auf eine einfache Verbindung des Luftschall absorbierenden Plattenkörpers mit dem Träger ist vorgesehen, daß der Plattenkörper aus einer Tiefziehfolie aus thermoplastischem Werkstoff besteht und auf der dem Träger zugewandten Seite mit zumindest einem aus der Folie ausgestülpten Befestigungsvorsprung versehen ist, eine Ausnehmung des Trägers zumindest teilweise durchdringt und mit dieser in Eingriff ist. Die Verbindung von Befestigungsvorsprung und Ausnehmung kann formschlüssig oder reibschlüssig sein. Formschluß liegt beispielsweise dann vor, wenn der Befestigungsvorsprung die Ausnehmung vollständig durchdringt und auf der dem Plattenkörper abgewandten Seite des Trägers einschnappt. Besteht die Ausnehmung des Trägers dagegen beispielsweise aus einem Sackloch, wird der Befestigungsvorsprung unter elastischer Verformung in die Ausnehmung eingedrückt und darin reibschlüssig gehalten. Insgesamt ist von Vorteil, daß für den Plattenkörper und den Träger unterschiedliche Materialien zur Anwendung gelangen können und daß ein drittes Befestigungsbauteil nicht erforderlich ist, wodurch sich die Montage vereinfacht und Schwierigkeiten bei der Demontage und der Wiederaufbereitung vermieden werden. Der Plattenkörper ist in einem Arbeitsgang herstellbar, wobei die akustischen Resonatoren ebenso wie die Befestigungsvorsprünge aus der Tiefziehfolie ausstülpbar sind.

Die Ausnehmung in dem Träger kann von dem Verfestigungsvorsprung des Plattenkörpers vollständig durchdrungen und auf der dem Plattenkörper abgewandten Seite hinter diesen eingeschnappt sein. Nach einer anderen Ausgestaltung kann die Ausnehmung beispielsweise durch ein Sackloch gebildet sein, in dem der tiefgezogene Befestigungsvorsprung mit relativem Übermaß unter umfangsseitiger Vorspannung an der Begrenzungswandung der Ausnehmung festlegbar ist.

Der Befestigungsvorsprung kann beispielsweise säulenförmig ausgestaltet und im Bereich seiner axialen Erstreckung an zumindest einer Stelle in radialer Richtung einbauchbar sein. Durch den in radialer Richtung herstellungsbedingt vergleichsweise unnachgiebigem Boden der Ausstülpung und die relativ radialelastisch nachgiebige Außenumfangsbegrenzung in axialer Richtung kann der Befestigungsvorsprung, wenn er die Ausnehmung vollständig durchdringt, hinter der Trägerplatte eingeschnappt und dadurch formschlüssig mit dieser verbunden sein.

Durchdringt der Befestigungsvorsprung die Ausnehmung nur teilweise, bewirkt die Ausgestaltung mit dem in radialer Richtung relativ unnachgiebigen Boden der Ausstülpung und der relativ nachgiebigen Umfangsbegrenzung außerhalb des Bodenbereichs in radialer Richtung eine Vorspannung und eine reibschlüssige Verbindung der zu verbindenden Teile.

Im Rahmen der vorliegenden Erfindung gelangen bevorzugt Befestigungen zur Anwendung, die durch einen Formschluß zwischen dem Plattenkörper und dem Träger gebildet sind.

Gemäß einer vorteilhaften Ausgestaltung kann der Träger plattenförmig gestaltet sein und aus einem duroplastischen Werkstoff bestehen. Neben einem geringen Gewicht, bietet sich dieser Werkstoff für die meisten Verwendungen an, da er außerdem korrosions- und wärmebeständig ist. Verkleidungselemente mit einem Luftschall absorbierenden Plattenkörper finden beispielsweise Anwendung in der Automobilindustrie als Motorraumauskleidung, in der Industrieakustik, zum Beispiel als Auskleidung für Schallschutzkabinen und als Wand- und Deckenverkleidung.

Im Hinblick auf eine einfache Fertigung können der Befestigungsvorsprung und die Ausnehmung einen im wesentlichen kreisförmigen Querschnitt aufweisen. Bei dieser Ausgestaltung ist von Vorteil, daß sich herstellungsbedingt ein leicht hinterschnittener Befestigungsvorsprung ergibt. Bei Beaufschlagung der Folie mit Wärme und anschließendem Anlegen an die Form durch Vakuumbeaufschlagung, behält der Boden des Befestigungsvorsprungs eine vergleichsweise große Wandstärke, während die Umfangswandung in Richtung des Trägers eine sich verringernde Dicke und damit zunehmende Nachgiebigkeit in radialer Richtung aufweist.

Um eine formschlüssige, dennoch oberflächenbündige Festlegung des Plattenkörpers an dem Träger zu erzielen, kann die Ausnehmung des Trägers auf der dem Plattenkörper abgewandten Seite einen sich trichterförmig erweiternden Querschnitt aufweisen. Der Befestigungsvorsprung kann bei entsprechender Ausbildung in die trichterförmige Hinterschneidung der Trägerplatte einschnappen und dadurch den Plattenkörper und den Träger unter elastischer Vorspannung sowohl in axialer als auch in radialer Richtung aneinander festlegen.

Sowohl die Befestigungsvorsprünge als auch die Resonatoren können unterschiedliche Formen aufweisen, wobei die Trägerplatte und der Plattenkörper einander beispielsweise nur im Bereich der Ausnehmung und des Befestigungsvorsprungs anliegend berühren. Durch den Spalt, der zwischen Plattenkörper und Träger gebildet ist, kann betriebsbedingt durch die Öffnung eingetretener Schmutz, beispielsweise Spritzwasser und Öl aus einem Motorraum durch eine Öffnung im Träger abgeführt werden. Im Anschluß an den Bereich von Ausnehmung und Befestigungsvorsprung begrenzen der Plattenkörper und der Träger einen Hohlraum, der zum Absorbieren von auftretenden Resonanzfrequenzen ausgebildet ist. Eine flächendeckende Anordnung verschieden großer Resonatoren zur Erzielung einer breitbandigen Dämpfung unterschiedlicher Frequenzen, kann durch diese Ausgestaltung auf geringem Bauraum erzielt werden.

Bei Verwendung unterschiedlicher Materialien für Träger und Plattenkörper können bei Erwärmung des Verkleidungselements unterschiedliche Wärmedehnungen auftreten, so daß ein Längenausgleich zwischen beiden Bauteilen geschaffen werden muß.

Dazu kann es vorgesehen sein, daß zumindest ein Befestigungsvorsprung in einer langlochförmigen Ausnehmung angeordnet ist und daß der Befestigungsvorsprung die Ausnehmung senkrecht zur wärmebedingten Ausdehnungsrichtung nur auf zwei einander gegenüberliegenden Teilbereichen unter radialer Vorspannung anliegend berührt. Dabei ist darauf zu achten, daß bei Wärmebeaufschlagung des Verkleidungselements eine unterschiedliche Wärmedehnung von Plattenkörper und Träger zugelassen werden kann, ohne daß Spannungen innerhalb des Plattenkörpers auftreten. Daraus folgen gute Gebrauchseigenschaften auch bei Temperaturbeaufschlagung des Plattenkörpers, beispielsweise in einem Motorraum eines Kraftfahrzeugs.

Nach einer anderen Ausgestaltung besteht die Möglichkeit, daß die formschlüssige Verbindung von Plattenkörper und Träger beispielsweise durch einen zusätzlich warmumgeformten Befestigungsvorsprung des Plattenkörpers gebildet sein. Zunächst wird der Plattenkörper mit seinen Befestigungsvorsprüngen auf der Trägerplatte korrekt positioniert, so daß die Befestigungsvorsprünge die Ausnehmungen der Trägerplatte vollständig durchdringen. Die Befestigungsvorsprünge weisen in Achsrichtung eine Erstreckung auf, die die Erstreckung der Ausnehmungen in gleicher Richtung übersteigen. Der Überstand kann nun beispielsweise unter Wärmezufuhr plastisch umgeformt werden, so daß sich eine formschlüssige Festlegung von Plattenkörper und Träger aneinander ergibt, die vergleichsweise größeren Belastungen standhält.

Das erfindungsgemäße Verkleidungselement wird nachfolgend anhand der als Anlage beigefügten Zeichnungen weiter erläutert. Diese zeigen jeweils einen Ausschnitt aus einem Verkleidungselement mit den zu berücksichtigenden Einzelkomponenten in geschnittener und schematischer Darstellung.

In Figur 1 ist ein Plattenkörper auf einem Träger montiert dargestellt.

In Figur 2 ist der Befestigungsvorsprung des Plattenkörpers oberflächenbündig und formschlüssig in eine Ausnehmung des Trägers eingepaßt.

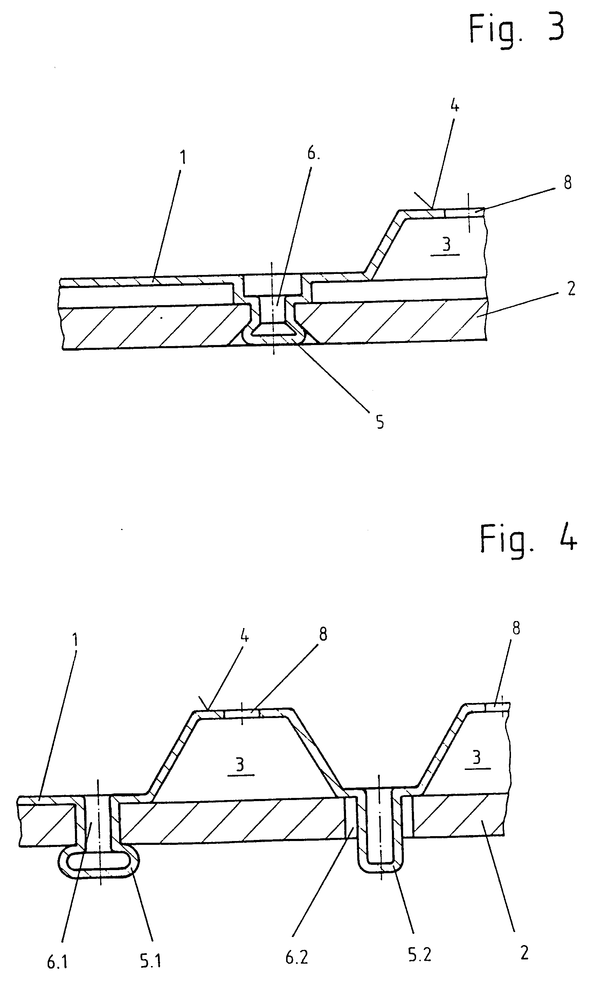

In Ausführungsbeispiel Figur 3 ist das Befestigungselement als Abstandhalter ausgebildet.

In Figur 4 sind der Plattenkörper und der Träger derart aneinander festgelegt, daß bei unterschiedlicher Wärmedehnung ein Längenausgleich ohne eine Verspannung des Plattenkörpers erfolgen kann.

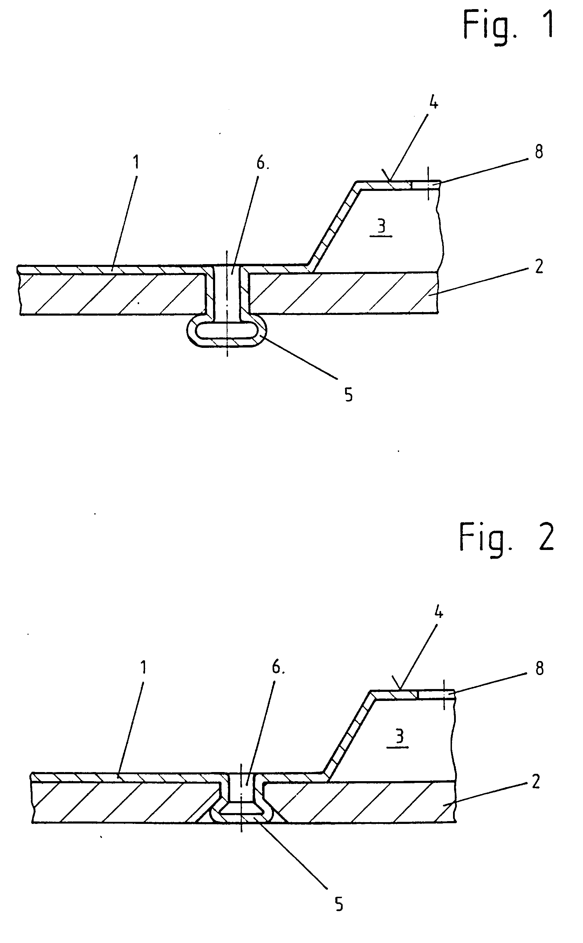

In den Figuren 1 bis 4 ist jeweils ein Ausführungsbeispiel eines Verkleidungselements gezeigt, das einen Plattenkörper aus einer thermoplastischen Tiefziehfolie umfaßt, die zum Absorbieren von Luftschall mit akustischen Resonatoren 3 versehen ist. Die Resonatoren 3 weisen auf der zur Schallquelle gerichteten Oberfläche 4 eine Öffnung 8 auf, die gemäß der Helmholz-Gleichung dimensioniert ist. Der Plattenkörper 1 besteht aus mehreren, unterschiedlich großen Resonatoren 3, um eine breitbandige Frequenz zu bedämpfen. Der Plattenkörper 1 ist biegeweich, so daß er beim Auftreffen von Luftschall zu Eigenschwingungen angeregt wird. Der Plattenkörper 1 und der plattenförmige Träger 2 sind in diesen Ausführungsbeispielen formschlüssig miteinander in Eingriff. Der Plattenkörper 1 kann in einem Arbeitsgang geformt werden, wobei die Resonatoren 3 und die Befestigungsvorsprünge 5 einstückig ineinander übergehend ausgebildet sind. Die Befestigungsvorsprünge 5 können generell eine beliebige Form haben und beispielsweise rund oder mehreckig ausgebildet sein. In den hier gezeigten Ausführungsbeispielen sind die Befestigungsvorsprünge 5 rund gestaltet. Auf der dem Plattenkörper 1 abgewandten Oberfläche des Trägers 2 weist der Befestigungsvorsprung 5 im Bereich seines Bodens eine vergleichsweise größere Steifigkeit in radialer Richtung auf, als im Bereich seiner axialen Erstreckung, so daß er den Träger 2 formschlüssig hintergreift. Eine haltbare, formschlüssige Verbindung ist dadurch gegeben.

In Figur 2 ist die Ausnehmung 6 des Trägers 2 auf der von dem Plattenkörper 1 abgewandten Seite mit einem sich trichterförmig erweiternden Querschnitt versehen, wobei der Befestigungsvorsprung 5 vollständig innerhalb der Ausnehmung 6 aufgenommen ist. Hierbei ist von Vorteil, daß der Träger 2 auf der von dem Plattenkörper 1 abgewandten Seite eine glattflächige Oberfläche aufweist und dadurch problemlos beispielsweise als Deckenverkleidung montiert werden kann.

In Figur 3 ist ein Ausführungsbeispiel gezeigt, bei dem der Befestigungsvorsprung 5 als Abstandhalter ausgebildet ist. Der Träger 2 unterscheidet sich von dem Träger 2 aus Figur 2 nicht. Durch die Ausgestaltung des Befestigungsvorsprungs 5 als Abstandhalter berühren sich die einander zugewandten Oberflächen von Plattenkörper 1 und Trägerplatte 2 nur unmittelbar im Bereich um die Ausnehmung. Durch den Spalt, der zwischen dem Plattenkörper 1 und dem Träger 2 gebildet ist, kann durch die Resonanzöffnungen eingetretener Schmutz, beispielsweise durch eine Öffnung im Träger 2 abgeführt werden. Dadurch ergeben sich auch während einer langen Gebrauchsdauer gleichbleibend gute Gebrauchseigenschaften.

In Figur 4 ist ein Befestigungssystem mit Längenausgleich zum Kompensieren unterschiedlicher Ausdehnungskoeffizienten bei Verwendung unterschiedlicher Werkstoffe für Plattenkörper 1 und Träger 2 gezeigt. Der eine Befestigungsvorsprung 5.1 ist formschlüssig in einer entsprechenden Ausnehmung 6.1 unter umfangsseitiger Vorspannung gehalten, während der andere Befestigungsvorsprung 5.2 von der anderen Ausnehmung 6.2 nur in zwei einander gegenüberliegenden Teilbereichen unter radialer Vorspannung anliegend berührt wird. Eine Berührung zwischen Befestigungsvorsprung 5.2 und Ausnehmung 6.2 findet nur senkrecht zur wärmebedingten Ausdehnungsrichtung von Träger 2 und/oder Plattenkörper 1 statt. Unterschiedliche Wärmedehnungen können durch diese Ausgestaltung ausgeglichen werden und eine spannungsfreie Festlegung des Plattenkörpers 1 auf der Trägerplatte 2 ist gewährleistet.

## Patentansprüche

1. Verkleidungselement, umfassend einen Luftschall absorbierenden Plattenkörper aus polymerem Werkstoff, der auf einem Träger festgelegt ist, wobei der Plattenkörper mit zumindest einem akustischen Resonator zum Absorbieren der entsprechenden Resonanzfrequenz versehen ist und wobei der Resonator auf seiner zur Schallquelle gerichteten Oberfläche eine gemäß der Helmholz-Gleichung dimensionierte Öffnung aufweist, dadurch gekennzeichnet, daß der Plattenkörper (1) aus einer Tiefziehfolie aus thermoplastischem Werkstoff besteht und auf der dem Träger (2) zugewandten Seite mit zumindest einem aus der Folie ausgestülpten Befestigungsvorsprung (5) versehen ist, der eine Ausnehmung (6) des Trägers (2) zumindest teilweise durchdringt und mit dieser in Eingriff ist.

2. Verkleidungselement nach Anspruch 1, dadurch gekennzeichnet, daß der Befestigungsvorsprung (5) säulenförmig ausgestaltet und im Bereich seiner axialen Erstreckung an zumindest einer Stelle in radialer Richtung einbauchbar ist.

3. Verkleidungselement nach Anspruch 1 bis 2, dadurch gekennzeichnet, daß der Befestigungsvorsprung (5) den Träger (2) im Bereich der Ausnehmung (6) vollständig durchdringt und auf der dem Plattenkörper (1) abgewandten Seite der Ausnehmung (6) einschnappbar und formschlüssig mit dieser verbunden ist.

4. Verkleidungselement nach Anspruch 1 bis 3, dadurch gekennzeichnet, daß der Träger (2) plattenförmig ausgebildet ist und aus einem duroplastischen Werkstoff besteht.

5. Verkleidungselement nach Anspruch 1 bis 4, dadurch gekennzeichnet, daß der Befestigungsvorsprung (5) und die Ausnehmung (6) einen im wesentlichen kreisförmigen Querschnitt aufweisen.

6. Verkleidungselement nach Anspruch 1 bis 5, dadurch gekennzeichnet, daß die Ausnehmung (6) auf der dem Plattenkörper (1) abgewandten Seite einen sich trichterförmig erweiternden Querschnitt aufweist und daß der Befestigungsvorsprung (5) oberflächenbündig in der Ausnehmung (6) angeordnet ist.

7. Verkleidungselement nach Anspruch 1 bis 6, dadurch gekennzeichnet, daß der Träger (2) und der Plattenkörper (1) einander nur im Bereich der Ausnehmung (6) und des Befestigungsvorsprung (5) anliegend berühren.

8. Verkleidungselement nach Anspruch 1 bis 7, dadurch gekennzeichnet, daß zumindest zwei Befestigungsvorsprünge (5.1, 5.2) zur Anwendung gelangen, von denen ein Befestigungsvorsprung (5.1) in einer langlochförmigen Ausnehmung (6) angeordnet ist und daß der Befestigungsvorsprung (5.2) die Ausnehmung (6.2) senkrecht zur wärmebedingten Ausdehnungsrichtung von Plattenkörper (1) und/oder Träger (2) nur in zwei einander gegenüberliegenden Teilbereichen unter radialer Vorspannung anliegend berührt.
